(19) Europäisches Patentamt
European Patent Office
Office européen des brevets

(11) EP 3 421 545 A1

(12) EUROPEAN PATENT APPLICATION
published in accordance with Art. 153(4) EPC

(43) Date of publication:
02.01.2019 Bulletin 2019/01

(21) Application number: 17756379.8

(22) Date of filing: 17.02.2017

(51) Int Cl.:
*C08L 101/12* (2006.01) *C01B 32/194* (2017.01)
*C01B 32/21* (2017.01) *C08J 5/18* (2006.01)
*C08K 3/04* (2006.01) *C08L 65/00* (2006.01)
*H01B 1/12* (2006.01) *H01B 1/20* (2006.01)
*H01B 1/24* (2006.01) *H01B 5/00* (2006.01)

(86) International application number:
PCT/JP2017/005940

(87) International publication number:
WO 2017/145940 (31.08.2017 Gazette 2017/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 22.02.2016 JP 2016030829
19.08.2016 JP 2016161308

(71) Applicants:
- Sekisui Chemical Co., Ltd.
Osaka-shi, Osaka 530-8565 (JP)
- National University Corporation Kobe University
Kobe-shi, Hyogo 657-8501 (JP)

(72) Inventors:
- MARUYAMA, Tatsuo
Kobe-shi
Hyogo 657-8501 (JP)
- IGUCHI, Hiroki
Kobe-shi
Hyogo 657-8501 (JP)
- MORI, Atsunori
Kobe-shi
Hyogo 657-8501 (JP)
- NAKASUGA, Akira
Mishima-gun
Osaka 618-0021 (JP)

(74) Representative: Ter Meer Steinmeister & Partner
Patentanwälte mbB
Nymphenburger Straße 4
80335 München (DE)

# (54) COMPOSITE MATERIAL, CONDUCTIVE MATERIAL, CONDUCTIVE PARTICLES, AND CONDUCTIVE FILM

(57) The present invention provides a composite material having excellent dispersibility in a solvent and increased conductivity. The composite material comprises a carbon material and a conductive dispersant physically or chemically bonded to the carbon material, the conductive dispersant is constituted by a conductive polymer, and the conductive polymer has a number average molecular weight of 2000 or more and 100000 or less.

EP 3 421 545 A1

**Description**

Technical Field

The present invention relates to a composite material, a conductive material, conductive particles, and a conductive film containing a carbon material.

Background Art

Carbon materials such as graphene, graphite, exfoliated graphite, and carbon nanotubes have promise for applications in the materials engineering field, the medical engineering field, or the electrical and electronic engineering field.

The following Patent Literature 1 discloses an electroconductive coating containing poly(3,4-ethylenedioxy)thiophene (PEDOT), polystyrene sulfonic acid (PSS), and a graphene oxide. Patent Literature 1 mentions that the graphene oxide is preferably sufficiently oxidized because its interaction with PEDOT/PSS components becomes stronger. Patent Literature 1 also mentions that adsorption of the PEDOT/PSS components on a graphene oxide having not very high conductivity increases the conductivity.

The following Patent Literature 2 discloses a conductive polymer material including a conductive polymer and graphene fluoride doped into the conductive polymer. Patent Literature 2 mentions that polythiophene, polypyrrole, polyaniline, or a derivative thereof is used as the above conductive polymer.

The following Non Patent Literature 1 discloses a graphene dispersion liquid including a surfactant.

Citation List

Patent Literature

Patent Literature 1
Japanese Patent Laid-Open No. 2013-35966
Patent Literature 2
National Publication of International Patent Application No. 2014-502653

Non Patent Literature

Non Patent Literature 1
L. Guardia et al., Carbon, 49, 1653 (2011)

Summary of Invention

Technical Problem

However, a carbon material, particularly graphene or exfoliated graphite may aggregate in a solvent, and thus become lower in physical properties or hard to process. In Non Patent Literature 1, a method including adsorption of a surfactant onto graphene is employed, but the conductivity may not be sufficiently increased by graphene including a surfactant adsorbed thereon. Additionally, the conductive coating of Patent Literature 1 and the conductive polymer of Patent Literature 2 still have insufficient conductivity.

It is an object of the present invention to provide a composite material having excellent dispersibility in a solvent and increased conductivity and a conductive material including a composite material layer formed of the composite material.

It is another object of the present invention to provide conductive particles and a conductive film having excellent conductivity.

Solution to Problem

In a broad aspect of the composite material according to the present invention, the composite material includes a carbon material and a conductive dispersant physically or chemically bonded to the carbon material, the conductive dispersant is constituted by a conductive polymer, and the conductive polymer has a number average molecular weight

of 2000 or more and 100000 or less.

In another broad aspect of the composite material according to the present invention, the composite material includes a carbon material and a conductive dispersant physically or chemically bonded to the carbon material, and the carbon material has a C/O ratio of 4 or more and 20 or less.

In a particular aspect of the composite material according to the present invention, the carbon material is graphene or exfoliated graphite.

In another particular aspect of the composite material according to the present invention, a weight ratio between the carbon material and the conductive dispersant (carbon material/conductive dispersant) is the range of 0.2 or more and 20 or less.

In still another particular aspect of the composite material according to the present invention, the conductive dispersant is constituted by an organic polymer. The organic polymer is preferably a polymer having a thiophene skeleton.

In an even another particular aspect of the composite material according to the present invention, the composite material is doped with a dopant.

The conductive material according to the present invention includes a base material and a composite material layer formed of a composite material of the present invention, and at least a portion of the surface of the base material is coated with the composite material layer.

In a broad aspect of the conductive particles according to the present invention, the conductive particles each include a base material particle and a composite material layer formed of a composite material of the present invention, and at least a portion of the surface of the base material particle is coated with the composite material layer.

In another broad aspect of the conductive particles according to the present invention, the conductive particles each include a base material particle and a conductive dispersant layer formed of a conductive dispersant, at least a portion of the surface of the base material particle is coated with the conductive dispersant layer, the conductive dispersant is constituted by a conductive polymer, and the conductive polymer has a number average molecular weight of 2000 or more and 100000 or less.

In a particular aspect of the conductive particles according to the present invention, the base material particles each have a resin particle and a metal layer, and at least a portion of the resin particle is coated with the metal layer.

The conductive film of the present invention is formed of a composite material of the present invention.

Advantageous Effect of Invention

According to the present invention, there can be provided a composite material having excellent dispersibility in a solvent and increased conductivity.

Brief Description of Drawings

Figure 1 is a graph showing results of absorption spectra measured for in dispersion liquids 1 to 5 prepared in Examples.
Figure 2 is an optical micrograph showing a state of a conductive film formed on a paper filter in Example 2, magnified 500 times.
Figure 3 is an optical micrograph showing a state of exfoliated graphite aggregating (scrolling) on a paper filter in Comparative Example 4, magnified 500 times.
Figure 4 is a graph showing results of absorption spectrum measurement in dispersion liquids 3, 6 to 8 prepared in Examples.
Figure 5 is an observation photograph of conductive particles obtained in Example 6.
igure 6 is a raman spectrum of conductive particles obtained in Example 6.

Description of Embodiments

The present invention will be described below in detail.

[Composite material]

The composite material according to the invention of the present application includes a carbon material and a conductive dispersant. The conductive dispersant described above is physically or chemically bonded to the carbon material described above. The composite material according to the invention of the present application, which includes a carbon material and a conductive dispersant physically or chemically bonded to the carbon material, has excellent

dispersibility in an organic solvent, for example, toluene and additionally increased conductivity.

In a first embodiment, the conductive dispersant described above is constituted by a conductive polymer. The conductive polymer has a number average molecular weight of 2000 or more and 100000 or less. In the first embodiment, the number average molecular weight of the conductive polymer is in the range described above, and thus, the dispersibility of the composite material in a solvent is further increased. The reasons are described as follows.

If the number average molecular weight of the conductive polymer is equal to or more than the lower limit described above, the force of the conductive polymer to inhibit aggregation of the carbon material in a solvent is likely to be stronger than the force of the carbon material to aggregate. On the other hand, if the number average molecular weight of the conductive polymer is equal to or less than the upper limit described above, the conductive polymer adsorbed on the carbon material in the production step makes it difficult to inhibit other conductive polymers which are not yet adsorbed on the carbon material from being adsorbed on the carbon material. Accordingly, the amount of the conductive polymer adsorbed on the carbon material can be further increased. According to these reasons, setting the number average molecular weight of the conductive polymer within the range described above can further improve the dispersibility of the carbon material in a solvent. That is, the dispersibility of the composite material in a solvent is further increased.

In a second embodiment, the C/O ratio of the carbon material is 4 or more and 20 or less. In the present invention, the C/O ratio is a C/O ratio obtained by elementary analysis. The C/O ratio obtained by elementary analysis refers to a ratio between the number of moles of the carbon atom and the number of moles of the oxygen atom. In the second embodiment, the C/O ratio of the carbon material is within the range described above, and thus, the conductivity of the composite material is further increased.

The first embodiment and the second embodiment may be used in combination. That is, the C/O ratio of the carbon material may be 4 or more and 20 or less, and simultaneously, the number average of molecular weight of the conductive polymer may be 2000 or more and 100000 or less. When the first embodiment and the second embodiment are used in combination, the dispersibility and conductivity of the composite material can be further increased.

Hereinbelow, the first and second embodiments of the present application may be collectively referred to as the present invention.

The composite material of the present invention may be doped with a dopant. In such a case, the conductivity of the composite material can be further increased. As the dopant described above, an organic cyano compound such as tetracyanoquinodimethane, sulfuric acid, hydrochloric acid, nitric acid, tetrachloroauric acid, or nitromethane can be used, for example.

Next, components constituting the composite material according to the present invention are each described in detail.

(Carbon material)

Examples of the carbon material include, without particular limitation, graphene, carbon black, carbon nanotubes, graphite, or exfoliated graphite. The form of carbon material, which is not particularly limited, is preferably a flat plate form, from the viewpoint of further improving the gas barrier property. Thus, the carbon material described above is preferably graphene or exfoliated graphite.

As well known, graphite is a stack of a plurality of graphene sheets. The layer number of graphene sheets in graphite is of the order of 100000 to 1000000. As the graphite, natural graphite, artificial graphite, expanded graphite, or the like can be used. The expanded graphite has a larger distance between graphene layers than usual graphite.

Exfoliated graphite, which is obtained by subjecting original graphite to exfoliating treatment, refers to a stack of graphene sheets thinner than the original graphite. The layer number of graphene sheets in exfoliated graphite may be smaller than that of the original graphite. In such exfoliated graphite, the layer number of graphene sheets is preferably 2 or more, more preferably 5 or more, preferably 300 or less, more preferably 200 or less, still more preferably 100 or less.

As the exfoliated graphite described above, commercially available exfoliated graphite may be employed. The exfoliated graphite may be obtained also by various treatments for exfoliating graphite.

Graphene or exfoliated graphite usually scrolls into a roll or tube form. Thus, when graphene or exfoliated graphite is employed as the carbon material, the contact area between graphene pieces, between exfoliated graphite pieces, or between a graphene or exfoliated graphite piece and a different conductive material piece is reduced. Accordingly, a high conductivity may not be achieved. When the graphene or exfoliated graphite scrolls into a roll or tube form, the gas barrier property is also reduced.

In contrast, in the present invention, even when the carbon material is graphene or exfoliated graphite, the graphene or exfoliated graphite is unlikely to scroll into a roll or tube form because a conductive dispersant is physically or chemically bonded to the graphene or exfoliated graphite. Thus, the contact area between graphene pieces, between exfoliated graphite pieces, or between a graphene or exfoliated graphite piece and a different conductive material piece increases to thereby improve the conductivity. The graphene or exfoliated graphite is physically or chemically bonded

to the conductive dispersant, and thus the conductivity is increased also from this point. In the present invention, the conductive dispersant reduces scrolling of the graphene or exfoliated graphite, and thus, the composite material of the present invention also has an excellent gas barrier property.

As aforementioned, in the composite material of the present invention, the graphene or exfoliated graphite is unlikely to scroll and has excellent conductivity and an excellent gas barrier property. The composite material of the present invention thus can be suitably used in conductive ink, conductive films, gas barrier films, or the like.

In the present invention, the carbon material has a C/O ratio of preferably 4 or more, more preferably 5 or more, preferably 20 or less, more preferably 10 or less. By setting the C/O ratio of the carbon material between the above lower limit or more and the above upper limit or less, the conductivity of the composite material can be further increased. A carbon material having a C/O ratio within the range described above can be produced in accordance with the method for producing exfoliated graphite described in Japanese Patent No. 5048873, for example.

The method for producing exfoliated graphite described in Japanese Patent No. 5048873 discloses a production method comprising the following steps 1 to 4, for example:

Step 1: a step of providing a sheet-form graphite or a sheet-form expanded graphite;
Step 2: a step of inserting a portion of an electrode formed of metal into the graphite or expanded graphite such that the portion penetrates each graphene plane of the graphite or expanded graphite to thereby bring the electrode into contact with a plurality of graphene layers constituting the graphite;
Step 3: a step of immersing at least the portion of the graphite or expanded graphite into which the portion of the electrode is inserted in an electrolyte aqueous solution and conducting electrochemical treatment in which the graphite is used as the working electrode and a direct current is applied between the working electrode and the counter electrode to thereby obtain a carbonaceous material at least a portion of which is expanded graphite; and
Step 4: a step of applying exfoliation force on the carbonaceous material after the step of obtaining the carbonaceous material to obtain exfoliated graphite.

In the present invention, the carbon material has a BET specific surface area of preferably 50 $m^2/g$ or more, more preferably 200 $m^2/g$ or more, still more preferably 300 $m^2/g$ or more, preferably 2500 $m^2/g$ or less, more preferably 2000 $m^2/g$ or less, still more preferably 1500 $m^2/g$ or less. At the BET specific surface area equal to or more than the lower limit described above, the gas barrier property of the composite material can be further increased. At the BET specific surface area equal to or less than the upper limit described above, the carbon material is further unlikely to aggregate, and the dispersibility of the composite material is further increased.

(Conductive dispersant)

The conductive dispersant is physically or chemically bonded to the carbon material. Physically bonded in the present invention refers to a state of being bonded or adsorbed by the van der Waals force or the like. In contrast, chemically bonded refers to a state of being bonded or adsorbed by a chemical bond such as a covalent bond or ionic bond.

The conductive dispersant may be constituted by a conductive polymer. As the conductive polymer, organic polymers having conductivity can be used. As the organic polymer having conductivity, without particular limitation, a polymer having a thiophene skeleton, poly(ionic liquid), or the like can be used, for example. From the viewpoint of further improving the conductivity, the organic polymer is preferably a polymer having a thiophene skeleton. Examples of the polymer having a thiophene skeleton include poly(3-hexylthiophene), poly(3,4-ethylenedioxy)thiophene, and poly(3-butylthiophene). From the viewpoint of the stability and conductivity, the polymer having a thiophene skeleton is preferably poly(3-hexylthiophene). Poly(3-hexylthiophene) can be synthesized in accordance with the synthesis method described in Non Patent Literature: S. Tamba, et al., J. Am. Chem. Sci., 133, 9700 (2011).

Poly(3-hexylthiophene) is represented by the following formula (1).

[Formula 1]

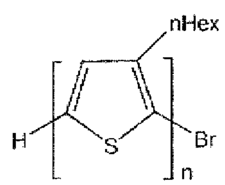

••• Formula (1)

As the polymer having a thiophene skeleton, poly(3-alkylthiophene) other than poly(3-hexylthiophene) also

may be used. An example of the poly(3-alkylthiophene) includes poly(3-octylthiophene) represented by the following formula (2). Poly(3-(hexyloxy))methylthiophene represented by the following formula (3) also may be used.

[Formula 2]

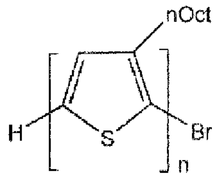

··· Formula (2)

[Formula 3]

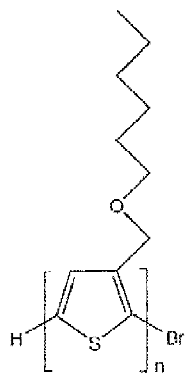

··· Formula (3)

As the polymer having a thiophene skeleton, a polymer having an alkyl group having a siloxane bond at the 3-position of thiophene (poly(3-(4-pentamethyldisiloxybutan-1-yl)thiophene-2,5-diyl)), as represented by the following formula (4), can be employed.

[Formula 4]

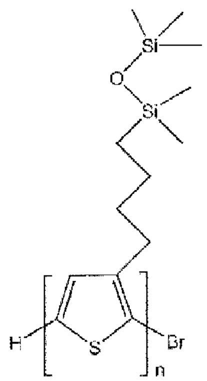

··· Formula (4)

In the present invention, the head-to-tail (also referred to as H-T hereinbelow) regioregularity of the polymer having a thiophene skeleton is preferably 80% or more, more preferably 90% or more. The H-T regioregularity refers to a percentage of repeat units regioregularly arranged head-to-tail.

When the H-T regioregularity is equal to or more than the lower limit described above, the dispersibility of the composite material into the solvent can be further increased.

The conductive polymer has a number average molecular weight (Mn) of preferably 2000 or more, more preferably 3000 or more, still more preferably 5000 or more, preferably 100000 or less, more preferably 80000 or less, still more preferably 50000 or less. In the case where the number average molecular weight (Mn) is within the range described

above, the dispersibility of the composite material into the solvent can be further increased.

The ratio between the weight average molecular weight (Mw) and the number average molecular weight (Mn), that is, the molecular weight distribution (Mw/Mn) is preferably 1.1 or more, more preferably 1.2 or more, preferably 1.5 or less, more preferably 1.3 or less. When the molecular weight distribution (Mw/Mn) is within the range described above, the dispersibility of the composite material into the solvent can be further increased.

The weight average molecular weight (Mw) and the number average molecular weight (Mn) represent the weight average molecular weight (Mw) and the number average molecular weight (Mn) in terms of polystyrene measured by gel permeation chromatography (GPC).

In order to adjust the number average molecular weight (Mn) described above and the molecular weight distribution (Mw/Mn) described above to the range described above, polymerization conditions such as the polymerization initiator and polymerization temperature may be adjusted.

In the present invention, a weight ratio between the carbon material and the conductive dispersant (carbon material/conductive dispersant) is preferably 0.2 or more, more preferably 0.5 or more, still more preferably 1.0 or more, preferably 20 or less, more preferably 10 or less, still more preferably 5 or less, particularly preferably 2 or less. When the weight ratio (carbon material/conductive dispersant) is within the range described above, the conductivity of the composite material can be further increased.

One example of the method for producing a composite material of the present invention will be described hereinbelow.

(Method for producing a composite material)

The composite material according to the present invention can be produced by the following method, for example.

First, a conductive dispersant is dissolved in a solvent to prepare a conductive dispersant solution. Subsequently, a carbon material is added to the conductive dispersant solution, and the solution is ultrasonically treated. This allows the conductive dispersant to be physically or chemically bonded to the carbon material, and thus, the composite material of the present invention can be obtained. The obtained composite material may be dispersed in a solvent and used as a dispersion liquid or may be used after dried. As for the dispersion liquid, the solution obtained by ultrasonic treatment is centrifuged to obtain a supernatant, which is desirably used as the dispersion liquid.

Examples of the solvent used in the method for producing a composite material of the present invention include toluene and chloroform.

[Conductive material]

The conductive material according to the present invention comprises a base material and a composite material layer formed of the aforementioned composite material of the present invention. At least a portion of the surface of the base material described above is coated with the composite material layer. The portion of the surface of the base material described above may be coated with the composite material layer, or the entire surface of the base material may be coated with the composite material layer.

The conductive material according to the present invention can be produced by the following method, for example. First, the base material is immersed in a dispersion liquid containing the aforementioned composite material of the present invention. Subsequently, the immersed base material is removed and the dispersion liquid is dried to obtain the conductive material in which the surface of the base material is coated with the composite material layer.

The conductive material of the present invention has increased conductivity because at least the portion of the surface of the base material is coated with the composite material layer formed of the aforementioned composite material of the present invention. The composite material layer described above also has an excellent gas barrier property and thus, is characterized in that its conductivity is unlikely to decrease even when the conductive material is oxidized in the conductive material of the present invention.

Examples of the base material described above include metal foils, conductive resin materials, and films including metal deposited or sputtered thereon. From the viewpoint of further improving the conductivity of the conductive material, the base material described above is preferably a metal foil.

Examples of the metal constituting the metal foil include gold, silver, palladium, copper, platinum, zinc, iron, tin, lead, aluminum, cobalt, indium, nickel, chromium, titanium, antimony, bismuth, thallium, germanium, cadmium, tungsten, molybdenum, silicon, and alloys thereof. From the viewpoint of effectively further improving the conductivity, copper or gold is preferred, and copper is more preferred.

[Conductive particle]

In a broad aspect of the conductive particles according to the present invention, the conductive particles each

include a base material particle and a composite material layer formed of the aforementioned composite material of the present invention. At least a portion of the surface of the base material particle described above is coated with the composite material layer. A portion of the surface of the base material particle described above may be coated with the composite material layer, or the entire surface of the base material particle may be coated with the composite material layer.

In another broad aspect of the conductive particles according to the present invention, the conductive particles each include a base material particle and a conductive dispersant layer formed of a conductive dispersant. At least a portion of the surface of the base material particle described above is coated with the conductive dispersant layer. A portion of the surface of the base material particle described above may be coated with the conductive dispersant layer, or the entire surface of the base material particle may be coated with the conductive dispersant layer.

With respect to the conductive dispersant layer described above, the conductive dispersant and the base material particles are physically or chemically bonded, for example. Physically bonded in the present invention refers to a state of being bonded or adsorbed by the van der Waals force or the like. In contrast, chemically bonded refers to a state of being bonded or adsorbed by a chemical bond such as covalent bond or ionic bond.

The conductive dispersant described above may be constituted by a conductive polymer. As the conductive polymer, organic polymers having conductivity can be used. As the organic polymer having conductivity, without particular limitation, a polymer having a thiophene skeleton, poly(ionic liquid), or the like can be used, for example. From the viewpoint of further improving the conductivity, the organic polymer is preferably a polymer having a thiophene skeleton. Examples of the polymer having a thiophene skeleton include poly(3-hexylthiophene), poly(3,4-ethylenedioxy)thiophene, and poly(3-butylthiophene). From the viewpoint of the stability and conductivity, the polymer having a thiophene skeleton is preferably poly(3-hexylthiophene). Poly(3-hexylthiophene) can be synthesized in accordance with the synthesis method described in Non Patent Literature : S. Tamba, et al., J. Am. Chem. Sci., 133, 9700 (2011).

The conductive polymer has a number average molecular weight (Mn) of preferably 2000 or more, more preferably 3000 or more, still more preferably 5000 or more, preferably 100000 or less, more preferably 80000 or less, still more preferably 50000 or less. In the case where the number average molecular weight (Mn) is within the range described above, the dispersibility of the conductive polymer into the solvent can be further increased.

The ratio between the weight average molecular weight (Mw) and the number average molecular weight (Mn), that is, the molecular weight distribution (Mw/Mn) is preferably 1.1 or more, more preferably 1.2 or more, preferably 1.5 or less, more preferably 1.3 or less. When the molecular weight distribution (Mw/Mn) is within the range described above, the dispersibility of the conductive polymer into the solvent can be further increased.

The weight average molecular weight (Mw) and the number average molecular weight (Mn) represent the weight average molecular weight (Mw) and the number average molecular weight (Mn) in terms of polystyrene measured by gel permeation chromatography (GPC).

In order to adjust the number average molecular weight (Mn) described above and the molecular weight distribution (Mw/Mn) described above to the range described above, polymerization conditions such as the polymerization initiator and polymerization temperature may be adjusted.

The conductive particles according to the present invention can be produced by the following method, for example. First, the base material particles are immersed in a dispersion liquid containing the aforementioned composite material of the present invention or a conductive dispersant. Subsequently, the immersed base material particles are removed and the dispersion liquid is dried to obtain the conductive particles in which the surface of the base material particles is coated with the composite material layer or the conductive dispersant layer.

The conductive particles of the present invention have increased conductivity because at least a portion of the surface of the base material particles is coated with the aforementioned composite material layer or the conductive dispersant layer. The composite material layer described above also has an excellent gas barrier property, and thus, is characterized in that its conductivity is unlikely to decrease even when the layer is oxidized.

As the base material particles described above, metal particles or resin particles of which surface is coated with a metal layer, that is, particles having a core-shell structure can be used. In such a particle having a core-shell structure, the core is a resin particle, and the shell is a metal layer.

Examples of the metal constituting the metal particles or the metal layer with which the resin particles described above are coated include gold, silver, palladium, copper, platinum, zinc, iron, tin, lead, aluminum, cobalt, indium, nickel, chromium, titanium, antimony, bismuth, thallium, germanium, cadmium, tungsten, molybdenum, silicon, and alloys thereof. From the viewpoint of effectively further improving the conductivity, copper or gold is preferred, and copper is more preferred.

As the resin constituting the resin particles described above, various organic substances are suitably employed. Examples of the resin for forming the resin particles described above include polyolefin resins such as polyethylene, polypropylene, polystyrene, polyvinyl chloride, polyvinylidene chloride, polyisobutylene and polybutadiene; acrylic resins such as polymethyl methacrylate and polymethyl acrylate; polyalkylene terephthalate, polycarbonate, polyamide, phenol formaldehyde resins, melamine formaldehyde resins, benzoguanamine formaldehyde resins, urea formaldehyde resins,

phenol resins, melamine resins, benzoguanamine resins, urea resins, epoxy resins, unsaturated polyester resins, saturated polyester resin, polysulfone, polyphenylene oxide, polyacetal, polyimide, polyamideimide, polyether ether ketone, polyether sulfone, and polymers obtained by polymerizing one or two or more of various polymerizable monomers having an ethylenically unsaturated group. Of these, copolymers of styrene and divinylbenzene are preferably used.

[Conductive film]

The conductive film of the present invention is formed of a composite material of the present invention aforementioned. Accordingly, the conductive film of the present invention has increased conductivity and an increased gas barrier property. The composite material described above also has an excellent gas barrier property and thus, is characterized in that its conductivity is unlikely to decrease even when the conductive material is oxidized in the conductive film of the present invention. Such a conductive film can be obtained by suction-filtering a dispersion liquid including the composite material described above dispersed in a solvent.

When graphene or exfoliated graphite is employed as the carbon material constituting the composite material described above, scrolling into a roll or tube form is likely to occur as aforementioned. Thus, the film may not be easily formed by a suction filtering method. The carbon material constituting the composite material of the present invention, however, includes a conductive dispersant physically or chemically bonded thereto to inhibit scrolling even when the carbon material is graphene or exfoliated graphite. Accordingly, the composite material of the present invention can be easily formed into a film by a suction filtering method.

In the present invention, the carbon material such as graphene or exfoliated graphite is not scrolled into a roll or tube form as aforementioned. Thus, the contact area between graphene pieces, between exfoliated graphite pieces, or between a graphene or exfoliated graphite piece and a different conductive material piece in the conductive film increases to thereby improve the conductivity. The carbon material has not scrolled either into a roll or tube form in the conductive film. For this reason, the conductive film of the present invention also has an excellent gas barrier property.

Next, the present invention will become apparent by reference to specific examples and comparative examples of the invention. Note that the present invention is not limited to the following examples.

(Preparation of dispersion liquids 1 to 5)

In accordance with the synthesis method described in Non Patent Literature : S. Tamba, et al., J. Am. Chem. Sci., 133, 9700 (2011), polymerization was carried out to prepare poly(3-hexylthiophene) (P3HT) having the following number average molecular weight (Mn) and polydispersity (Mw/Mn).

P3HT-1...Mn = 6000, Mw/Mn = 1.10
P3HT-2...Mn = 10000, Mw/Mn = 1.10
P3HT-3...Mn = 20000, Mw/Mn = 1.12
P3HT-4...Mn = 45000, Mw/Mn = 1.04
P3HT-5...Mn = 75000, Mw/Mn = 1.21

Exfoliated graphite was prepared by pyrolysis in accordance with a welder method. The obtained exfoliated graphite had a BET specific surface area of 562 $m^2/g$, and the layer number of the graphene sheets was 5. The exfoliated graphite had a C/O ratio of 14.5. The C/O ratio herein was measured using a scanning X-ray photoelectron spectroscopic apparatus (manufactured by ULVAC-PHI. Inc., model: PHI 5000 VersaProbe II).

A sample of 1.0 mg was collected each from the obtained P3HT-1 to 5 and dissolved in 3 ml of toluene, to which 1.0 mg of the prepared exfoliated graphite was further added. The obtained solution was subjected to ultrasonic treatment using an ultrasonic treatment apparatus (manufactured by AS ONE Corporation) under conditions including 110 W, transmission frequency of 31 kHz, 80°C and 30 minutes. Subsequently, the solution was cooled in a water bath at 30°C for 15 minutes. Then, the solution was centrifuged at an acceleration of 1000 $\times$ G for 20 minutes, and the supernatant was collected with a syringe to obtain each of the dispersion liquids 1 to 5. As the dispersion liquids 1 to 5, the following P3HT polymers were each used.

Dispersion liquid 1...P3HT-1
Dispersion liquid 2...P3HT-2
Dispersion liquid 3...P3HT-3
Dispersion liquid 4...P3HT-4
Dispersion liquid 5...P3HT-5

Absorption spectrum measurement was carried out on each of the collected dispersion liquids using a spectrophotometer (manufactured by JASCO Corporation, product name: V-770). An absorbance at 660 nm was determined with the setting temperature of 80°C. The results are shown in Figure 1. From Figure 1, it can be seen that the smaller the number average molecular weight (Mn) of P3HT, the higher the absorbance. That is, it can be seen that the dispersibility of the exfoliated graphite has been increased.

(Example 1)

Base material particles (manufactured by SEKISUI CHEMICAL CO., LTD., product name: Micropearl AU, CuMPs) were immersed in the dispersion liquid 1 prepared as described above in a water bath at 40°C for 90 minutes. The base material particles coated with the composite material layer were removed from the dispersion liquid 1 and dried to obtain conductive particles.

(Comparative Example 1)

Base material particles (manufactured by SEKISUI CHEMICAL CO., LTD., product name: Micropearl AU, CuMPs) were used, as they were, as conductive particles.

(Evaluation method)

Electrical resistivity measurement;

The electrical resistivity of conductive particles obtained in Example 1 and Comparative Example 1 was measured as follows.

First, the conductive particles were sandwiched between two aluminum plates. The two aluminum plates sandwiching the conductive particles therebetween were supported by placing the plates between the jaws of a micrometer screw gauge (manufactured by Shinwa Rules Co., Ltd., product name: Micrometer 0-25 mm), and the electrical resistance value was measured using an ohmmeter (manufactured by CUSTOM corporation, product name: Digital multimeter).

The electrical resistivity was determined using the following expression.

$$\text{Electrical resistivity } (\Omega\bullet\text{cm}) = \text{Electrical resistance value } (\Omega) \times \text{Conductive distance (cm)}$$

[the conductive distance, which is a distance of a half of the circumference, was determined according to $1/2\pi \times$ (Diameter of a conductive particle).]

Additionally, the conductive particles obtained in Example 1 and Comparative Example 1 were oxidized by heating in an oven at 200°C for 30 minutes, and the electrical resistivity was determined by a method similar to that described above.

The results are shown in Table 1 below.

[Table 1]

| | | Example 1 | Comparative Example 1 |
|---|---|---|---|
| Dispersion liquid | | Dispersion liquid 1 | - |
| Electrical resistance value (Ω) | Before oxidation test | 0.77 | 0.57 |
| | After oxidation test | 0.70 | 2.35 |

As shown in Table 1, while the electrical resistivity after oxidation test greatly increased in Comparative Example 1, no increase in the electrical resistivity was observed even after oxidation test in Example 1.

(Example 2)

Provided was 2.5 ml of the dispersion liquid 1 prepared as described above. Subsequently, the provided dispersion liquid 1 was suction-filtered using a paper filter (No. 5B, 8 mm). After suction filtration, the paper filter was

thermally-treated at 100°C for five minutes. A conductive thin film (conductive film) was thus formed on the paper filter.

Figure 2 is an optical micrograph showing a state of a conductive film formed on a paper filter in Example 2, magnified 500 times. As the optical microscope, part number "VH-5000C" manufactured by KEYENCE CORPORATION was used. From Figure 2, it was able to confirm that the conductive film was spread on the paper filter and a continuous structure in which the paper filter was coated with the conductive film was formed in Example 2.

Additionally, the sheet resistance was measured on the obtained conductive film using a simple low resistivity meter (manufactured by Mitsubishi Chemical Analytech Co., Ltd., part number "Loresta AXMCPT 370" (MCP-TFP probe)"). The results are shown in Table 2 below.

(Comparative Example 2)

A film was produced in the same manner as in Example 2 except that a solution prepared using a Brij type surfactant (manufactured by ADEKA CORPORATION, product name "Adekatol TN-100") instead of P3HT-1 was used instead of the dispersion liquid 1. The sheet resistance of the obtained film was also measured in the same manner as in Example 2. The results are shown in Table 2 below.

(Comparative Example 3)

A film was produced in the same manner as in Example 2 except that a solution prepared using a Pluronic type surfactant (manufactured by ADEKA CORPORATION, product name "Adeka Pluronic L-44") instead of P3HT-1 was used instead of the dispersion liquid 1. The sheet resistance of the obtained film was also measured in the same manner as in Example 2. The results are shown in Table 2 below. As shown in Table 2, the sheet resistance of the film of Comparative Example 3 was too high to be measured.

(Comparative Example 4)

A film was produced in the same manner as in Example 2 except that a solution prepared by adding 1.0 mg of exfoliated graphite only to 3 ml of toluene without using P3HT-1 was provided instead of the dispersion liquid 1. As shown in the optical micrograph in Figure 3, however, it was observed that, in Comparative Example 4, the exfoliated graphite aggregated (scrolled) on the paper filter and the paper filter was exposed in many portions. As describe above, in Comparative Example 4, the exfoliated graphite aggregated, and it was impossible to obtain a (thin) film.

[Table 2]

| | Example 2 | Comparative Example 2 | Comparative Example 3 |
|---|---|---|---|
| Sheet resistance [$\Omega$/sq] (x$10^3$) | 1.83 | 6.13 | Non-measurable |

(Preparation of dispersion liquid 6)

In a Schlenk flask dried up and purged with nitrogen, 1.0 mmol (1.0 eq.) of 2-bromo-3-octylthiophene and 1.0 mmol (1.0 eq.) of 2,2,6,6-tetramethylpiperidinyl magnesium chloride lithium chloride (K-H base) were added and allowed to react at room temperature for three hours. Next, tetrahydrofuran and 3.9 mg (0.005 mmol) of $NiCl_2(PPh_3)$IPr catalyst were added, and the mixture was allowed to react at room temperature for an hour. After reaction, 4 ml of 0.1 M hydrochloric acid and 10 ml of methanol were added, and the mixture was sufficiently stirred. After stirring, the mixture was filtered using a Kiriyama funnel, and the filter residue was washed with hexane. The filter residue was vacuum dried overnight to thereby obtain poly(3-octylthiophene) (P3OT) represented by the formula (2) above. The obtained P3OT had a molecular weight of Mn = 23000 and a polydispersity of Mw/Mn = 1.29.

A sample of 1.0 mg was collected from the obtained P3OT and dissolved in 3 ml of toluene, to which 1.0 mg of the exfoliated graphite produced in the same manner as in the case of preparation of the dispersion liquids 1 to 5 was further added. The obtained solution was subjected to ultrasonic treatment using an ultrasonic treatment apparatus (manufactured by AS ONE Corporation) under conditions including 110 W, transmission frequency of 31 kHz, 80°C, and 30 minutes. Subsequently, the solution was cooled in a water bath at 30°C for 15 minutes. Then, the solution was centrifuged at an acceleration of 1000 $\times$ G for 20 minutes, and the supernatant was collected with a syringe to obtain a dispersion liquid 6.

(Preparation of dispersion liquid 7)

In a Schlenk flask dried up and purged with nitrogen, 1.0 mmol (1.0 eq.) of 2-bromo-3-(hexyloxy)methylthiophene and 1.0 mmol (1.0 eq.) of 2,2,6,6-tetramethylpiperidinyl magnesium chloride lithium chloride (K-H base) were added and allowed to react at room temperature for three hours. Next, 9.0 ml of tetrahydrofuran and 3.9 mg (0.005 mmol) of $NiCl_2(PPh_3)IPr$ catalyst were added, and the mixture was allowed to react at room temperature for an hour. After reaction, 4 ml of 0.1 M hydrochloric acid and 10 ml of methanol were added, and the mixture was sufficiently stirred. After stirring, the mixture was filtered using a Kiriyama funnel, and the filter residue was washed with hexane. The filter residue was vacuum dried overnight to thereby obtain poly(3-((hexyloxy)methyl)thiophene) (P3HOT) represented by the formula (3) above. The obtained P3HOT had a molecular weight of Mn=17000 and a polydispersity of Mw/Mn = 1.31.

Next, the dispersion liquid 7 was obtained in the same manner as the method for preparing the dispersion liquid 6 except that the obtained P3HOT was used instead of P3OT used in the method for preparing the dispersion liquid 6.

(Preparation of dispersion liquid 8)

In a Schlenk flask dried up and purged with nitrogen, 0.18 g (0.50 mmol (1.0 eq.)) of 2-bromo-3-(4-pentamethyldisiloxybutan-1-yl)thiophene and 0.55 mL (0.55 mmol (1.1 eq.)) of 2,2,6,6-tetramethylpiperidinyl magnesium chloride lithium chloride (K-H base) were added and allowed to react at 60°C for an hour. Next, 5.0 ml of tetrahydrofuran and 3.9 mg (0.005 mmol) of $NiCl_2(PPh_3)IPr$ catalyst were added, and the mixture was allowed to react at 60°C for an hour. After reaction, 2.0 ml of 0.1 M hydrochloric acid and 10 ml of methanol were added, and the mixture was sufficiently stirred. After stirring, the mixture was filtered using a Kiriyama funnel, and the filter residue was washed with hexane. The filter residue was vacuum dried overnight to thereby obtain a polymer (poly(3-(4-pentamethyldisiloxybutan-1-yl)thiophene-2,5-diyl)) (P3SiT), having an alkyl group having a siloxane bond at the 3-position of thiophene, represented by the above formula (4). The obtained P3SiT had a molecular weight of Mn = 21000 and a polydispersity of Mw/Mn = 1.19.

Next, the dispersion liquid 8 was obtained in the same manner as the method for preparing the dispersion liquid 6 except that the obtained P3SiT was used instead of P3OT used in the method for preparing the dispersion liquid 6.

Absorption spectrum measurement was carried out on the collected dispersion liquid 3 (P3HT), dispersion liquid 6 (P30T), dispersion liquid 7 (P3HOT), and dispersion liquid 8 (P3SiT) using a spectrophotometer (manufactured by JASCO Corporation, product name: V-770). The Absorbance in the wavelength range of 200 to 900 nm was determined with the setting temperature of 80°C. The results at a wavelength of 600 nm are shown in Figure 4.

From Figure 4, it can be seen that the obtained dispersion liquids 3 and 6 to 8 each have a high absorbance. That is, it can be seen that the dispersibility of the exfoliated graphite has been increased. Particularly, it can be seen that the dispersion liquid 7, in which P3HOT is employed, has further increased dispersibility. This is because the π-π interaction strongly acted due to the long conjugated chain in P3HOT. In contrast, in the dispersion liquid 8, in which P3SiT is employed, the dispersibility is sufficiently increased, but its bulky siloxane moiety in the side chain prevents physical adsorption with exfoliated graphite. Accordingly, it is believed that the dispersibility of the exfoliated graphite is slightly reduced compared with that of other dispersion liquids.

(Example 3)

A TCNQ solution (100 mM) was prepared by dissolving 5.104 mg of tetracyanoquinodimethane (TCNQ) in 0.25 ml of dimethylsulfoxide (DMSO). In a sample bottle into which 250 μL of the TCNQ solution thus prepared was added, 0.67 mg of a conductive film produced in the same manner as in Example 2 was immersed at room temperature for two hours. Thereafter, the conductive film was removed and dried in a vacuum oven at 60°C for 30 minutes. In this manner, a conductive film formed of a composite material doped with TCNQ (composite material of exfoliated graphite and P3HT-1) was obtained. The sheet resistance was measured on the obtained conductive film by a method similar to that in Example 2 using an electrical resistivity meter. The results are shown in Table 3 below.

[Table 3]

| | Example 3 | Example 2 | Comparative Example 2 | Comparative Example 3 |
|---|---|---|---|---|
| TCNQ doping | Yes | No | No | No |
| Sheet resistance [Ω/sq] ($\times 10^3$) | 1.31 | 1.83 | 6.13 | Non-measurable |

As shown in Table 3, it can be seen that use of the composite material doped with TCNQ further reduces the sheet resistance.

(Example 4)

In a TCNQ solution (75 mM, 0.1 ml) prepared in the same manner as in Example 3, 1.0 mg of a conductive particles produced in the same manner as in Example 1 were immersed at 30°C for two hours. Thereafter, the conductive particles were removed and dried in a vacuum oven at 60°C for 30 minutes. In this manner, conductive particles formed of a composite material doped with TCNQ (composite material of exfoliated graphite and P3HT-1) were obtained.

Figure 5 is an observation photograph of the obtained conductive particles. The appearance of the obtained conductive particles was black.

Figure 6 is a raman spectrum of the obtained conductive particles. As shown in Figure 6, a peak derived from the nitrile group at a position of 2200 $cm^{-1}$ was observed. This reveals that TCNQ is adsorbed on the obtained conductive particles.

The electrical resistivity was measured on the obtained conductive particles using an ohmmeter (manufactured by CUSTOM corporation, product name: Digital multimeter) by a method similar to that in Example 1. The results are shown in Table 4 below.

[Table 4]

| | | Example 4 | Example 1 |
|---|---|---|---|
| TCNQ doping | | Yes | No |
| Electrical resistance value (Ω) | Before oxidation test | 0.68 | 0.77 |

As shown in Table 3, it can be seen that use of the composite material doped with TCNQ further reduces the electrical resistivity.

## Claims

**1.** A composite material comprising:

a carbon material; and
a conductive dispersant physically or chemically bonded to the carbon material,
wherein the conductive dispersant is constituted by a conductive polymer, and the conductive polymer has a number average molecular weight of 2000 or more and 100000 or less.

**2.** A composite material comprising:

a carbon material; and
a conductive dispersant physically or chemically bonded to the carbon material,
wherein the carbon material has a C/O ratio of 4 or more and 20 or less.

**3.** The composite material according to claim 1 or 2, wherein the carbon material is graphene or exfoliated graphite.

**4.** The composite material according to any one of claims 1 to 3, wherein a weight ratio between the carbon material and the conductive dispersant is in the range of 0.2 or more and 20 or less.

**5.** The composite material according to any one of claims 1 to 4, wherein the conductive dispersant is constituted by an organic polymer.

**6.** The composite material according to claim 5, wherein the organic polymer is a polymer having a thiophene skeleton.

**7.** The composite material according to any one of claims 1 to 6, wherein the composite material is doped with a dopant.

**8.** A conductive material comprising:

a base material; and
a composite material layer formed of the composite material according to any one of claims 1 to 7,
wherein at least a portion of the surface of the base material is coated with the composite material layer.

**9.** A conductive particle comprising:

a base material particle; and
a composite material layer formed of the composite material according to any one of claims 1 to 7,
wherein at least a portion of the surface of the base material particle is coated with the composite material layer.

**10.** A conductive particle comprising:

a base material particle; and
a conductive dispersant layer formed of a conductive dispersant,
wherein at least a portion of the surface of the base material particle is coated with the conductive dispersant layer,
the conductive dispersant is constituted by a conductive polymer, and
the conductive polymer has a number average molecular weight of 2000 or more and 100000 or less.

**11.** The conductive particle according to claim 9 or 10, wherein the base material particle has a resin particle and a metal layer, and at least a portion of the resin particle is coated with the metal layer.

**12.** A conductive film comprising the composite material according to any one of claims 1 to 7.

[FIG. 1]

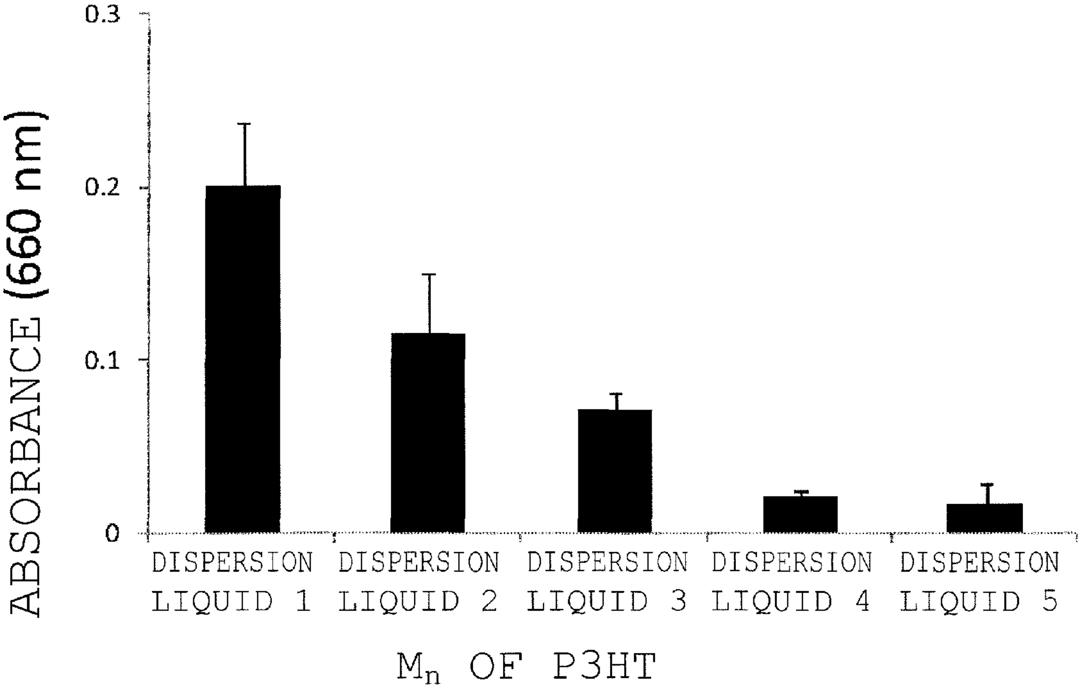
ABSORBANCE (660 nm)
0.3
0.2
0.1
0
DISPERSION LIQUID 1
DISPERSION LIQUID 2
DISPERSION LIQUID 3
DISPERSION LIQUID 4
DISPERSION LIQUID 5
$M_n$ OF P3HT

[FIG. 2]

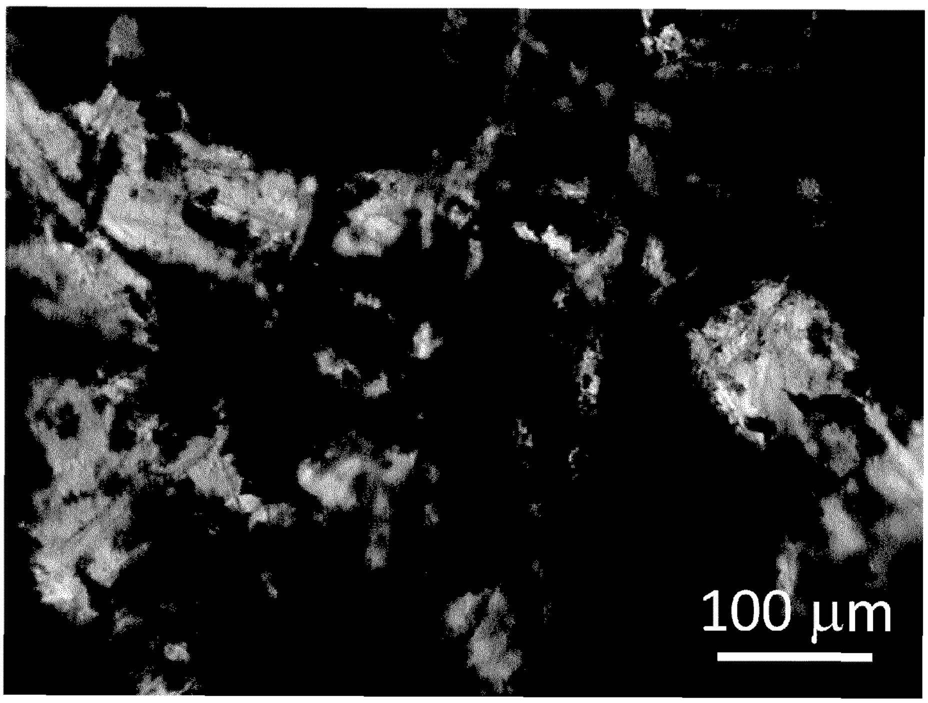
100 μm

[FIG. 3]

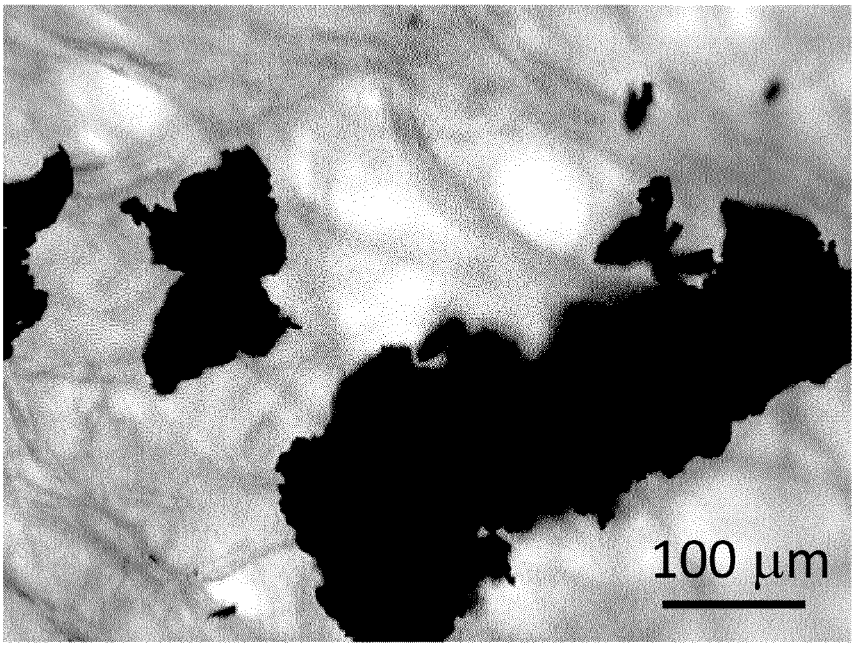
100 μm

[FIG. 4]

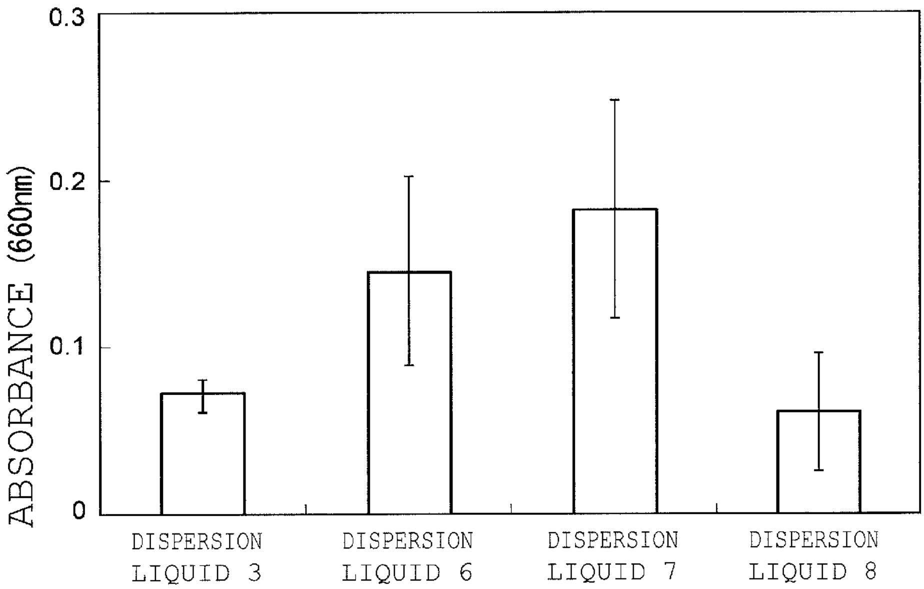
0.3
0.2
0.1
0
ABSORBANCE (660nm)
DISPERSION LIQUID 3
DISPERSION LIQUID 6
DISPERSION LIQUID 7
DISPERSION LIQUID 8

[FIG. 5]

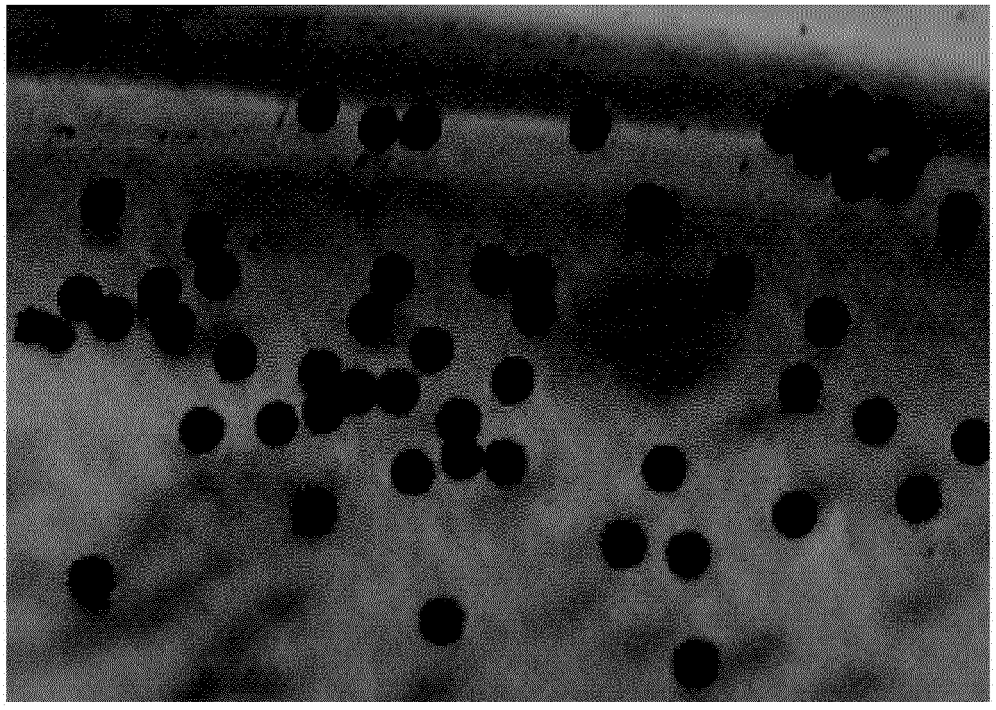

[FIG. 6]

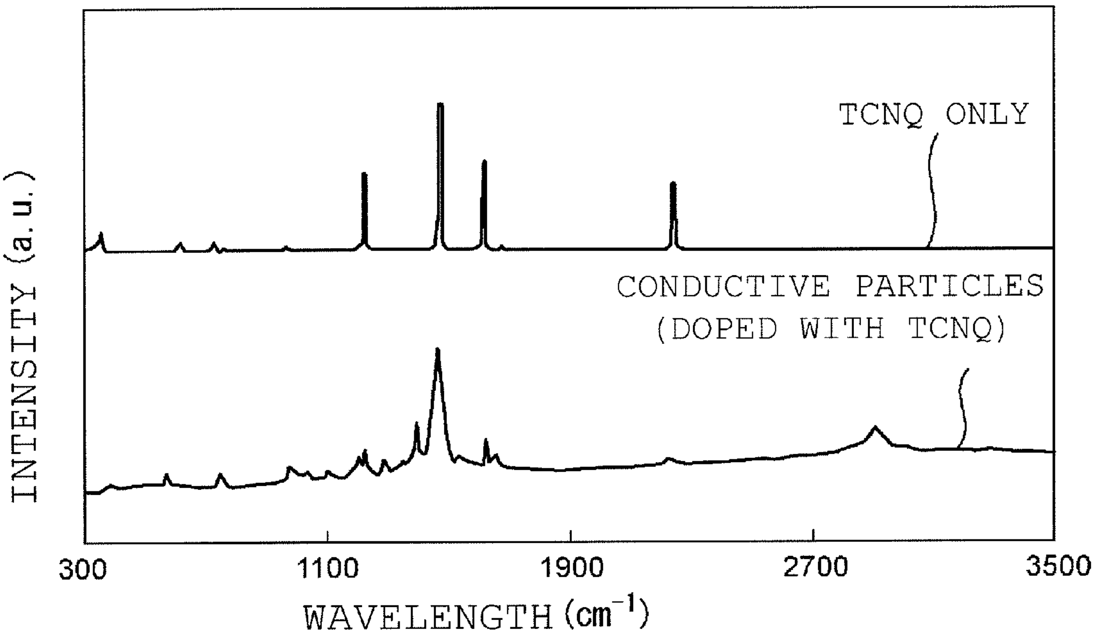
TCNQ ONLY
CONDUCTIVE PARTICLES
(DOPED WITH TCNQ)
INTENSITY (a. u.)
300
1100
1900
2700
3500
WAVELENGTH (cm$^{-1}$)

## INTERNATIONAL SEARCH REPORT

International application No. PCT/JP2017/005940

A. CLASSIFICATION OF SUBJECT MATTER
*C08L101/12*(2006.01)i, *C01B32/194*(2017.01)i, *C01B32/21*(2017.01)i, *C08J5/18*(2006.01)i, *C08K3/04*(2006.01)i, *C08L65/00*(2006.01)i, *H01B1/12*(2006.01)i, *H01B1/20*(2006.01)i, *H01B1/24*(2006.01)i, *H01B5/00*(2006.01)i
According to International Patent Classification (IPC) or to both national classification and IPC

B. FIELDS SEARCHED

Minimum documentation searched (classification system followed by classification symbols)
C08L1/00-101/16, C01B32/194, C01B32/21, C08K3/04, H01B1/12, H01B1/20, H01B1/24, H01B5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-296126 A (Shin-Etsu Polymer Co., Ltd.), 21 October 2004 (21.10.2004), claims; paragraphs [0011] to [0014], [0020] to [0025], [0030], [0033], [0040] to [0041] (Family: none) | 1-12 |
| X<br>A | JP 2009-238394 A (Fujifilm Corp.), 15 October 2009 (15.10.2009), claims; paragraphs [0051], [0061], [0070], [0083] to [0090] (Family: none) | 1-2,4-12<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 April 2017 (28.04.17) | 16 May 2017 (16.05.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

INTERNATIONAL SEARCH REPORT

International application No. PCT/JP2017/005940

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2015/060423 A1 (The Yokohama Rubber Co., Ltd.), 30 April 2015 (30.04.2015), claims; paragraphs [0014] to [0018], [0021], [0026], [0035] & JP 2015-82483 A & US 2016/0285096 A1 claims; paragraphs [0041] to [0055], [0061], [0090] & CN 105658575 A | 1-3,5-12<br>4 |
| X | JP 11-241021 A (Toyobo Co., Ltd.), 07 September 1999 (07.09.1999), claims; paragraphs [0010], [0015], [0017], [0026], [0030], [0038] (Family: none) | 1-12 |
| X<br><br>A | JP 2-307867 A (Kurosaki Refractories Co., Ltd.), 21 December 1990 (21.12.1990), claims; page 1, upper right column, lines 3 to 5; page 3, lower right column, 8th to 12th lines from the bottom; page 4, upper right column, lines 2 to 9 (Family: none) | 2-5,8-9, 11-12<br>1,6-7,10 |
| P,X<br><br>P,A | JP 2016-108234 A (Dainippon Printing Co., Ltd.), 20 June 2016 (20.06.2016), claims; paragraphs [0034], [0039] to [0040], [0048]; examples 1, 4, 6 & WO 2016/088753 A1 | 2-4,8-9, 11-12<br>1,5-7,10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013035966 A
- WO 2014502653 A
- JP 5048873 B


### Non-patent literature cited in the description


- **L. GUARDIA et al.** *Carbon,* 2011, vol. 49, 1653
- **S. TAMBA et al.** *J. Am. Chem. Sci.,* 2011, vol. 133, 9700